(19)

Europäisches Patentamt
European Patent Office
Office européen des brevets

(11) **EP 3 806 227 A1**

(12) **EUROPEAN PATENT APPLICATION**
published in accordance with Art. 153(4) EPC

(43) Date of publication:
**14.04.2021 Bulletin 2021/15**

(51) Int Cl.:
*H01M 10/48* (2006.01)      *B60L 3/00* (2019.01)
*B60L 50/15* (2019.01)      *B60L 50/40* (2019.01)
*B60L 50/50* (2019.01)      *B60L 53/00* (2019.01)
*B60L 55/00* (2019.01)      *B60L 58/00* (2019.01)
*G01R 31/36* (2020.01)      *H01M 10/44* (2006.01)
*H02J 7/00* (2006.01)

(21) Application number: **19810309.5**

(22) Date of filing: **11.03.2019**

(86) International application number:
**PCT/JP2019/009831**

(87) International publication number:
**WO 2019/230110 (05.12.2019 Gazette 2019/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.05.2018   JP 2018102320**

(71) Applicant: **Hitachi, Ltd.
Tokyo 100-8280 (JP)**

(72) Inventors:
• **KAWAHARA, Youhei
Tokyo 100-8280 (JP)**

• **HONKURA, Kohei
Tokyo 100-8280 (JP)**
• **ISHIKAWA, Katsumi
Tokyo 100-8280 (JP)**
• **SHINOMIYA, Takeshi
Tokyo 100-8280 (JP)**
• **TAKAHASHI, Chiaki
Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54) **BATTERY CONTROL DEVICE, BATTERY CONTROL SYSTEM, AND BATTERY CONTROL METHOD**

(57)   The present invention is provided with a charging rate detection unit that, on the basis of information about characteristics of a storage battery and a physical quantity measured by a measurement unit, detects a charging rate of the storage battery, an error detection unit that detects a detection error of the charging rate, and a charging rate control unit that controls the charging rate of the storage battery. The error detection unit is configured to detect, in real time, an error of the charging rate of the storage battery detected by the charging rate detection unit. The charging rate detection unit is configured to switch, on the basis of the error of the charging rate detected by the error detection unit, the charging rate detection method for detecting the charging rate of the storage battery to another charging rate detection method where necessary, so as to ameliorate the error. The charging rate control unit is configured to transmit, to a host control device, a charging/discharging command for providing instructions on charging or discharging of the storage battery, in accordance with a result of detection by the error detection unit.

FIG. 9

**Description**

Technical Field

The present invention relates to a battery control device, a battery control system, and a battery control method and is especially preferable to be applied to a control device that controls charging and discharging of a secondary battery disposed in a hybrid railway vehicle.

Background Art

Currently, global environmental problems have been highlighted and it has been requested to reduce the emission of carbon dioxide gases in various situations in order to prevent global warming. Under this background, the replacement of cars, which use gasoline engines that are of one type of sources that emit carbon dioxide gases, with hybrid cars or electric cars has been progressed.

On the other hand, in recent years, as rechargeable storage batteries, lithium-ion secondary batteries, nickel-hydrogen batteries, lead batteries, electric double layer capacitors, and the like exist, and a secondary battery system having a plurality of high-power and high-density battery cells, such as lithium ion batteries, has been widely used for industrial applications. Especially, in recent years, as a power storage system for a vehicle, a high-voltage and large-capacity secondary battery system has begun to be widely used.

The secondary battery system is widely used to save energy in the field of railway vehicles. For example, the secondary battery system is used for a hybrid railway vehicle that uses a combination of the secondary battery system and a generator to be driven by a diesel engine to supply power to a motor, a railway vehicle system that is disposed in an electric vehicle and causes regenerative electric power to be absorbed in a secondary battery when there is no regenerative load, a hybrid train (that uses the secondary battery system as a power source to travel between stations and charges the secondary battery system at a station) with the secondary battery system and train lines provided for the purpose of eliminating overhead contact lines, and the like.

A large secondary battery represented by a power supply source is requested to supply a high voltage and have a large capacity. Therefore, the secondary battery of this type is generally composed of storage battery modules connected to each other in series and parallel. Each of the storage battery modules has a plurality of battery cells connected to each other in series and parallel. As the battery cells, lithium ion batteries are used in many cases.

For the battery cells, a usable temperature range, a usable voltage range, a charging rate range, the maximum current enabling charging and discharging, and the like, which guarantee operations, are defined as specifications. The use of the battery cells outside the usable ranges defined as the specifications may significantly degrade the battery cells and may cause failures in the battery cells in the worst case.

Therefore, a battery control device for detecting states of the battery cells is disposed in the secondary battery system. The battery control device detects battery states, such as charging rates (also called charging states, and hereinafter referred to as states of charge (SOCs)) of the battery cells, or detects how much the battery cells are charged or how many charges able to be discharged remain in the battery cells. The battery control device detects other battery states, such as degradation states (states of health (SOHs) of the battery cells, the amount of current and the amount of power that enable the maximum amount of charges to be charged and discharged. The battery control device detects another battery state, such as identification information indicating whether the inside of the secondary battery system is normal or abnormal.

Among the battery states to be detected by the battery control device, the SOCs are parameters important to manage energy input to and to be output from the secondary battery system. When the SOCs can be detected with high accuracy, the performance of the secondary battery system can be maximized, and as a result, a fuel efficiency of a hybrid railway vehicle having the secondary battery system mounted thereon or the like can be improved. Therefore, for the hybrid railway vehicle having the secondary battery system mounted thereon or the like, it is important to establish a method (hereinafter referred to as SOC detection method) of detecting the SOCs with high accuracy.

To satisfy the foregoing request, Patent Literature 1 discloses a technique for selecting an SOC by current integration until a predefined time period elapses from the start of prediction calculation after the turning on of an ignition switch and selecting an SOC predicted using an adaptive digital filter after the convergence of the difference between a measured value of a voltage of a second battery and a predicted voltage value. This method can avoid a reduction in the accuracy of the prediction and use the adaptive digital filter to predict a charged capacity of the secondary battery.

Citation List

Patent Literature

Patent Literature 1: Japanese Patent Application Laid-Open No. 2006-105821

Summary of Invention

Technical Problem

According to the invention disclosed in Patent Literature 1, when an SOC detection error (hereinafter referred to as SOC error) increases, it is possible to avoid a reduction in the accuracy of the detection of the SOC by switching to a result of detecting the SOC by another SOC detection method. Causes of the increase in the SOC error are a feature of the SOC detection method, characteristics of battery cells, a calculation error that has occurred due to the accuracy of a sensor and an environmental condition, and the like. When the battery cells can transition to active states so that the accuracy of detecting the SOC is easily secured in consideration of the foregoing situations, it is possible to reliably avoid a reduction in the accuracy of the SOC.
The invention has been devised in consideration of the foregoing features and provides a battery control device, a battery control system, and a battery control method that can reliably avoid a reduction in the accuracy of SOC detection and may control charging and discharging of a secondary battery with high reliability.

Solution to Problems

To solve the foregoing problems, according to the invention, a battery control device that controls charging and discharging of a storage battery includes a measurer and a state detector. The measurer measures a predetermined physical amount related to a state of the storage battery. The state detector detects the state of the storage battery. The state detector includes a charging rate detector, an error detector, a charging rate controller, and a load controller. The charging rate detector detects a charging rate of the storage battery based on the physical amount measured by the measurer and characteristic information of the storage battery. The error detector detects an error in the charging rate detected by the charging rate detector. The charging rate controller controls the charging rate of the storage battery. The load controller charges and discharges the storage battery. The error detector detects, in real time, an error in the charging rate, detected by the charging rate detector, of the storage battery based on one or more of information items that are the measurement result of the measurer, the characteristic information of the storage battery, and a calculation error that occurs depending on an environmental condition, or calculates an error based on the charging rate in advance and predicts an error in the charging rate according to the detection result of the charging rate detector based on a relationship between the charging rate confirmed in advance and the error in the charging rate. The charging rate detector can detect the charging rate of the storage battery by different charging rate detection methods and switches a charging rate detection method of detecting the charging rate of the storage battery to another one of the charging rate detection methods based on the error in the charging rate that has been detected or predicted by the error detector so as to improve the error. The charging rate controller transmits, to a higher-level control device, a charge/discharge instruction to charge or discharge the storage battery based on the result of the detection or prediction by the error detector. The load controller charges or discharges the storage battery according to a control instruction given by the higher-level controller based on the charge/discharge instruction.
In addition, according to the invention, a battery control system that controls charging and discharging of a storage battery includes a measurer, a state detector, and a higher-level control device. The measurer measures a predetermined physical amount related to a state of the storage battery. The state detector detects the state of the storage battery. The higher-level control device controls the charging and discharging of the storage battery based on the result of the detection by the state detector. The state detector includes a charging rate detector, an error detector, a charging rate controller, and a load controller. The charging rate detector detects a charging rate of the storage battery based on the physical amount measured by the measurer and characteristic information of the storage battery. The error detector detects or predicts an error in the charging rate detected by the charging rate detector. The charging rate controller controls the charging rate of the storage battery. The load controller charges and discharges the storage battery. The error detector detects, in real time, an error in the charging rate, detected by the charging rate detector, of the storage battery based on one or more of information items that are the result of the measurement by the measurer, the characteristic information of the storage battery, and a calculation error that occurs depending on an environmental condition, or calculates an error based on the charging rate in advance and predicts an error in the charging rate according to the detection result of the charging rate detector based on relationships between the charging rate confirmed in advance and the error in the charging rate. The charging rate detector can detect the charging rate of the storage battery by different charging rate detection methods and switches a charging rate detection method of detecting the charging rate of the storage battery to another one of the charging rate detection methods based on the error in the charging rate that has been detected or predicted by the error detector so as to improve the error. The charging rate controller transmits, to the higher-level control device, a charge/discharge instruction to charge or discharge the storage battery based on the result of the detection or prediction by the error detector. The load controller charges or discharges the storage battery according to a control instruction given by the higher-level control device based on the charge/discharge instruction. The storage battery is mounted on a railway vehicle. The higher-level control device acquires a result of predicting the charging rate when the railway vehicle arrives at a next stop station. The higher-level control device transmits, to the load controller, the control instruction to charge or discharge the storage battery with the amount of electric power to eliminate a difference between the acquired result of predicting the charging rate and the target value.

Furthermore, according to the invention, a battery control method is executed by a battery control device that controls charging and discharging of a storage battery. The battery control device includes a measurer and a state detector. The measurer measures a predetermined amount related to a state of the storage battery. The state detector detects the state of the storage battery. The state detector includes a charging rate detector, an error detector, a charging rate controller, and a load controller. The charging rate detector can detect the charging rate of the storage battery by different charging rate detection methods and detects the charging rate of the storage battery based on the physical amount measured by the measurer and characteristic information of the storage battery. The error detector detects an error in the charging rate detected by the charging rate detector. The charging rate controller controls the charging rate of the storage battery. The load controller charges and discharges the storage battery. The battery control method includes a first step of causing the error detector to detect, in real time, an error in the charging rate, detected by the charging rate detector, of the storage battery based on one or more of information items that are the result of the measurement by the measurer, the characteristic information of the storage battery, and a calculation error that occurs depending on an environmental condition, or calculates an error based on the charging rate in advance and predicts an error in the charging rate according to the detection result of the charging rate detector based on relationships between the charging rate confirmed in advance and the error in the charging rate, a second step of causing the charging rate detector to switch a charging rate detection method of detecting the charging rate of the storage battery to another one of the charging rate detection methods based on the error in the charging rate that has been detected or predicted by the error detector so as to improve the error, a third step of causing the charging rate controller to transmit, to a higher-level control device, a charge/discharge instruction to charge or discharge the storage battery based on the result of the detection or prediction by the error detector, and a fourth step of causing the load controller to charge or discharge the storage battery according to a control instruction given by the higher-level control device based on the charge/discharge instruction.

Since the battery control device, the battery control system, and the battery control method according to the invention can recognize, in real time, the characteristic information of the storage battery, a measurement error characteristic of the measurer, a charging rate detection error that has occurred due to a peripheral environment or the like, the battery control device, the battery control system, and the battery control method according to the invention can easily suppress the charging rate detection error, thereby reliably reducing the charging rate detection error.

Advantageous Effects of Invention

According to the invention, it is possible to reliably reduce a reduction in the accuracy of detecting an SOC and achieve a battery control device and a battery control method that may control charging and discharging of a secondary battery with high reliability.

Brief Description of Drawings

Figures 1 are schematic diagrams illustrating an example of storage when a storage battery system is mounted on a railway vehicle.
Figure 2 is a block diagram illustrating an example of a configuration of an electrical system of a hybrid railway vehicle to which the invention is applied.
Figure 3 is a block diagram illustrating an example of a configuration of a power storage device illustrated in Figure 2.
Figure 4 is a block diagram illustrating an example of a logical configuration of a state detector illustrated in Figure 3.
Figure 5 is a circuit diagram illustrating an equivalent circuit of a battery cell.
Figures 6(A) and 6(B) are diagrams illustrating characteristic curves indicating relationships between OCVs of battery cells and SOCs of the battery cells.
Figures 7(A) and 7(B) are diagrams illustrating characteristic curves provided to describe relationships between an OCV error and an SOC error.

Figures 8(A) and 8(B) are diagrams illustrating characteristic curves provided to describe relationships between the OCV error and the SOC error.

Figure 9 is a flowchart illustrating a process procedure for an SOC detection process.

Figure 10 is a diagram illustrating a characteristic curve provided to describe an SOC detection method based on an SOC region.

Figure 11 is a flowchart provided to describe an SOC detection process according to another embodiment.

Figure 12 is a flowchart provided to describe an SOC detection process according to still another embodiment.

Figure 13(A) is a schematic diagram provided to describe a method of predicting the amount of a change in an SOC.

Figure 13(B) is a diagram illustrating a characteristic curve provided to describe the method of predicting the amount of a change in an SOC.

Figure 14 is a flowchart illustrating a process procedure for a charging/discharging control process.

Description of Embodiments

An embodiment of the invention is described in detail with reference to the drawings.

(1) First Embodiment

(1-1) System Configuration

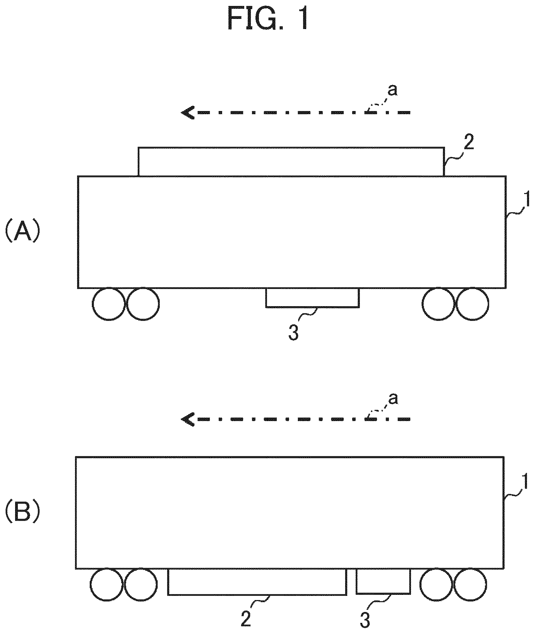

Figure 1 illustrates an example of storage when a storage battery system is mounted on a railway vehicle 1. A traveling direction (indicated by an arrow a) is a longitudinal direction, while a direction in which sleepers extend is a transverse direction. The storage battery system is large in size. Therefore, when a storage battery is mounted on the railway vehicle 1, a power storage device 2 storing the storage battery is disposed on a roof side of the railway vehicle 1 as illustrated in Figure 1(A) or is disposed under a floor of the railway vehicle 1 as illustrated in Figure 1(B).

However, the power storage device 2 may be disposed in a dedicated vehicle (not illustrated). Although Figure 1 exemplifies the case where an overall controller 3 that controls the entire railway vehicle 1 is disposed under the floor of the railway vehicle 1, the overall controller 3 may be disposed on the roof side of the railway vehicle 1 or disposed in the railway vehicle 1.

The power storage device 2 is configured by storing, in a single casing, a battery module composed of a plurality of batteries as a battery pack or one or more battery units configured by combining a plurality of the battery modules. In the casing of the power storage device 2, not only the one or more battery units but also a control board, a sensor, and other electrical and mechanical structural components are stored.

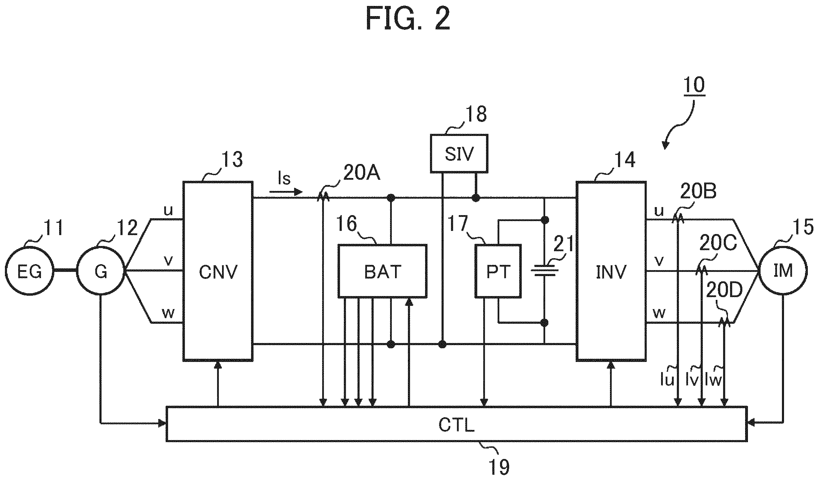

Figure 2 illustrates an example of a configuration of an electrical system of a hybrid railway vehicle 10. The hybrid railway vehicle 10 includes an engine 11, a generator 12, a converter 13, an inverter 14, an induction motor 15, a decelerator (not illustrated), and a power storage device 16 as main constituent elements. The generator 12 is driven by the engine 11 and outputs alternating-current power. The converter 13 converts the alternating-current power into direct-current power. The inverter 14 converts the direct-current power into alternating-current power. The induction motor 15 drives the railway vehicle. The decelerator decelerates output of the induction motor 15 and transmits the output to a wheel set (not illustrated). The power storage device 2 illustrated in Figure 1 corresponds to the power storage device 16 illustrated in Figure 2.

In the hybrid railway vehicle 10, the generator 12 directly coupled to the engine 11 via a shaft generates alternating-current power (three-phase alternating-current power) in three phases U, V, and W and outputs the generated three-phase alternating-current power to the converter 13. The converter 13 converts the three-phase alternating-current power into direct-current power and outputs the direct-current power to the inverter 14. The inverter 14 converts the direct-current power output from the converter 13 into three-phase alternating-current power of a variable voltage and a variable frequency and supplies the three-phase alternating-current power as driving power to the induction motor 15.

The power storage device 16 is connected to output (direct-current side) of the converter 13 in parallel and supplies power at the time of the activation of the railway vehicle. The power storage device 16 is also connected to input (direct-current side) of the inverter 14 and supplies the driving power for traveling of the railway vehicle to the induction motor 15. A smoothing capacitor 21 is connected to the input of the inverter 14 in parallel and suppresses a variation in a voltage to be input to the inverter 14. A static inverter (SIV) 18 generates power to be used in the railway vehicle.

The controller 19 generates a pulse width modulation (PWM) control signal to control the converter 13 based on an output current Is output from the converter 13 and detected by a current detector 20A, a voltage applied between both ends of the smoothing capacitor 21 and detected by a voltage detector 17, and a rotation frequency of the generator 12. The controller 19 outputs the generated PWM control signal to the converter 13.

In addition, the controller 19 generates a PWM control signal to control the inverter 14 based on driving power Iu, Iv, and Iw in phases U, V, and W that has been output from the inverter 14 for the induction motor 15 and detected by current detectors 20B, 20C, and 20D, the voltage applied between both ends of the smoothing capacitor 21 and detected by the voltage detector 17, and the rotational frequency of the induction motor 15. The controller 19 outputs the generated PWM control signal to the inverter 14.

Furthermore, the controller 19 controls charging and discharging of a storage battery within the power storage device 16 based on the state of the power storage device 16 that has been notified from the power storage device 16, as described later. In fact, the power storage device 16 detects the state of the power storage device 16 based on a total current in the concerned device, a total voltage in the concerned device, a temperature of the concerned device, and an environment temperature and notifies the result of the detection to the controller 19. Then, the controller 19 determines the state of the power storage device 16 based on the notified result of the detection and outputs a charging/discharging control signal to control the charging and discharging of the power storage device 16 to an external device in accordance with the result of the determination.

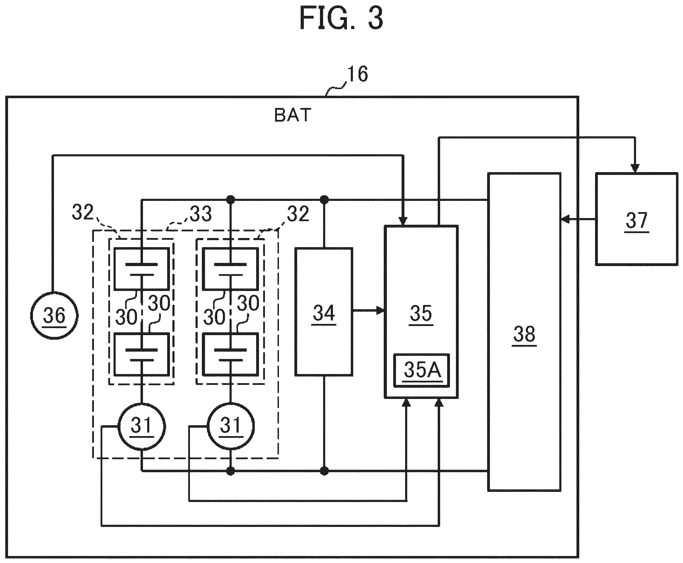

Figure 3 illustrates a general example of a configuration of the power storage device 16 illustrated in Figure 2. The power storage device 16 includes a battery unit 33 having a plurality of modules connected to each other in parallel. In each of the modules, a storage battery 32 composed of a plurality of battery modules (assembled battery) 30 is connected to a current detecting device 31 in series. A total voltage of the battery unit 33 is detected by a voltage detecting device 34. The voltage detecting device 34 notifies the result of the detection to the state detector 35.

The state detector 35 detects states, such as a charging rate (SOC) of the battery unit 33, a state of health (SOH) of the battery unit 33, the amount of current and the amount of power (acceptable amount of current and acceptable amount of power) enabling charging and discharging, and an abnormal state (overvoltage and overcurrent) based on the total voltage of the battery unit 33 that has been notified from the voltage detecting device 34, current values detected by the current detecting devices 31, and the temperature of the battery unit 33 that has been measured by a thermometer 36. The state detector 35 notifies the results of the detection as battery state information to a higher-level controller 37 (corresponding to the controller 19 illustrated in Figure 2). A load controller 38 charges or discharges the battery unit 33 based on a charging/discharging control instruction given by the higher-level controller 37 based on the battery state information.

(1-2) SOC Detection Method by State Detector

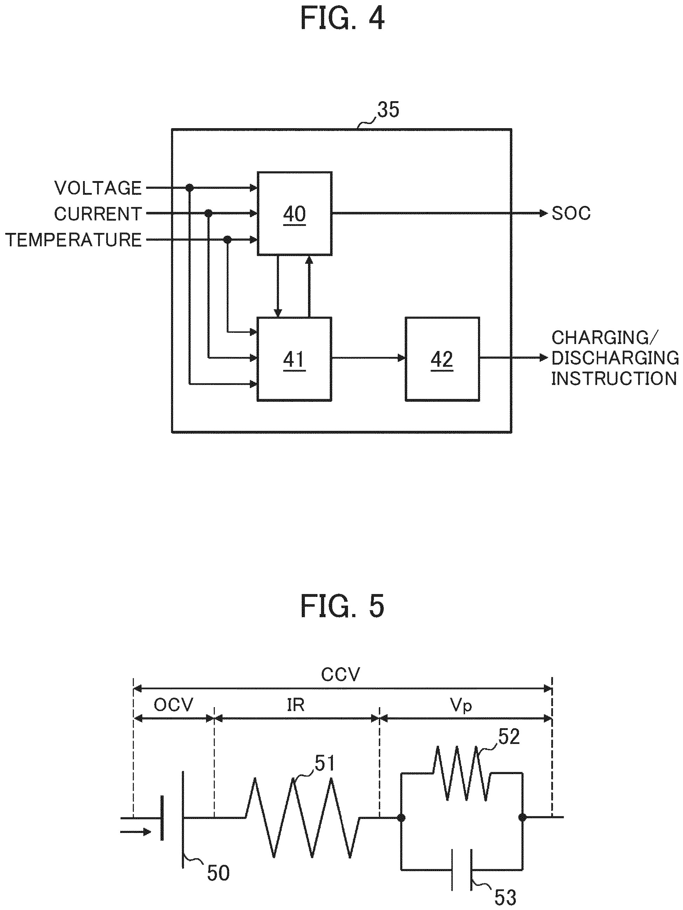

Figure 4 illustrates a logical configuration of the state detector 35 that is related to the detection of the charging rate (SOC) of the battery unit 33. An SOC detector 40 is a functional section having a function of receiving a total current of the storage batteries 32, a total voltage of the storage batteries 32, and the temperature of the power storage device 16 and detecting the SOC in real time. In addition, an error detector 41 is a functional section having a function of calculating, in real time, an error (SOC error) included in the SOC detected by the SOC detector 40. Furthermore, an SOC controller 42 is a functional section having a function of transmitting, to the higher-level controller 37 (controller 19 illustrated in Figure 2) illustrated in Figure 3, a charging/discharging instruction based on the SOC error calculated by the error detector 41.

A method (hereinafter referred to as SOC detection method) of detecting the SOC is used in a process of detecting the SOC by the SOC detector 40 and is described below. Conventionally, as SOC detection methods, a method (hereinafter referred to as first SOC detection method) of detecting an SOC using a voltage reference and a method (hereinafter referred to as second SOC detection method) of detecting an SOC by current integration are widely known.

The first SOC detection method is a method of measuring correspondence relationships between a voltage of a battery cell and an SOC of the battery cell in advance, storing the correspondence relationships as voltage-SOC conversion information, and calculating the SOC from the voltage of the battery cell based on the voltage-SOC conversion information. According to the first SOC detection method, relationships between the voltage and the SOC vary depending on a characteristic of the battery cell from which the voltage has been acquired, and thus the accuracy of conversion executed to obtain the SOC from the voltage of the battery cell may vary.

The second SOC detection method is a method of calculating the SOC by measuring the value of a current input to and output from the battery cell and integrating the current value. According to the second SOC detection method, a measurement error included in the measured current value is also integrated and thus there is a problem that an SOC error increases over time.

The first and second SOC detection methods have individual specific features (problems). Therefore, it is necessary to secure the accuracy of the detected SOC by switching an SOC detection method between the first and second SOC detection methods based on conditions, such as a characteristic of the battery cell, sensor performance, and a peripheral environment.

The first SOC detection method (SOC detection method using the voltage reference) and the second SOC detection method (SOC detection method by the current integration) are described below in detail. First, the first SOC detection method is described.

Figure 5 illustrates an equivalent circuit for a battery cell included in a battery module (assembled battery) 30 (Figure 3). In Figure 5, 50 indicates electromotive force or an open circuit voltage (OCV), 51 indicates internal resistance (R), 52 indicates a polarization resistance component, and 53 indicates a capacitance component.

As illustrated in Figure 5, a voltage characteristic of the battery cell can be represented by parallel connection of a pair of the polarization resistance component 52 and the capacitance component 53 and series connection of the internal resistance 51 and the electromotive force 50. When a current value I is applied to the battery cell, a voltage CCV between both terminals of the battery cell is represented by Equation (1), where Vp is a polarization voltage corresponding to a voltage applied to the parallel connection of the pair of the polarization resistance component 52 and the capacitance component 53.

[Equation 1]

$$CCV = OCV + I \times R + Vp \qquad \cdots\cdots (1)$$

The OCV is used to calculate an SOC. In a state in which the battery cell is charged or discharged, it is not possible to directly measure the OCV. Therefore, the OCV is calculated by subtracting $I \times R$ and Vp from CCV, as expressed by Equation (2). $I \times R$ indicates an IR drop.

[Equation 2]

$$OCV = CCV - I \times R - Vp \qquad \cdots\cdots (2)$$

In Equation (2), CCV is the total voltage detected by the voltage detecting device 34, I is a current value detected by the current detecting device 31 (Figure 3), R is calculated from a characteristic parameter (characteristic information) of the battery cell, Vp is calculated from the current value detected by the current detecting device 31 and the foregoing characteristic parameter of the battery cell. The characteristic parameter of the battery cell is stored in a storage region 35A (Figure 3) included in the state detector 35. The OCV can be calculated using these values. When the characteristic parameter of the battery cell is extracted and stored based on battery states, such as the SOC of the battery cell and the temperature of the battery cell, the OCV can be calculated with high accuracy.

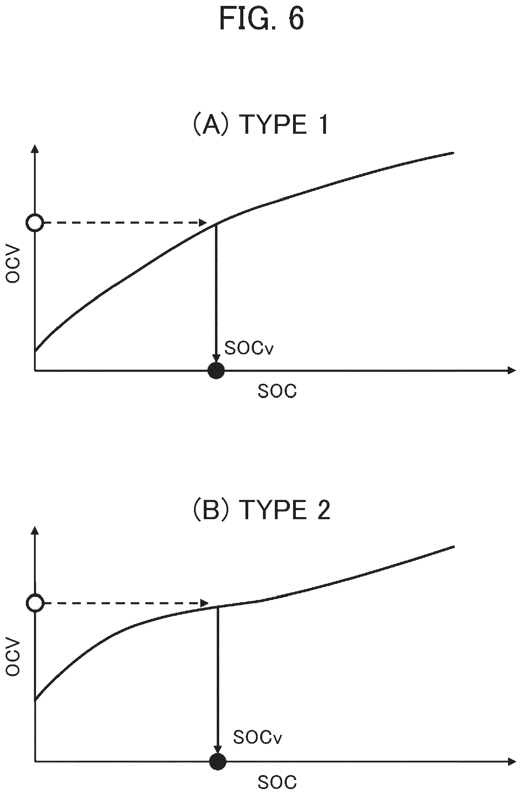

Next, the SOC is calculated based on the calculated OCV. To calculate the SOC, relationships between the OCV and the SOC are used. The OCV and the SOC have predetermined relationships, depending on a characteristic of a material forming the battery cell. Figures 6(A) and 6(B) illustrate relationships between OCVs and SOCs of battery cells of different types (type 1 (Type1) in Figure 6(A) and type 2 (Type2) in Figure 6(B)). Although a difference between materials forming the battery cells affects the relationships between the OCVs and the SOCs, the OCVs can be calculated according to Equation (2) in both cases and the SOCs of the battery cells can be detected from the extracted relationships between the OCVs and the SOCs. Each of the SOCs obtained from the OCVs is hereinafter referred to as "SOCv".

Although the OCVs can be calculated in the foregoing manner, an error may occur in the results of calculating the OCVs, due to a voltage measurement error that may occur due to measurement performance of the voltage detecting device 34 (Figure 3), a current measurement error that may occur due to measurement performance of the current detecting devices 31 (Figure 3), an error in R or Vp, or the like. In the method of calculating the SOCs from the OCVs, effects when errors (hereinafter referred to as OCV errors and represented by ΔOCVs) in the OCVs occur vary depending on the type 1 and the type 2.

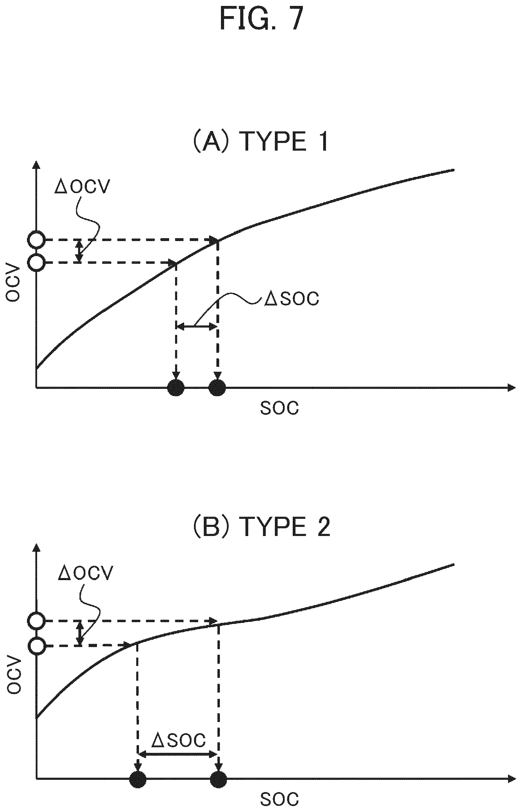

Figures 7 illustrate SOC errors (hereinafter referred to as SOC errors) that occur when OCV errors are given. In the type 2 in which a voltage is slightly flat, even when the same OCV error is given, it is possible to confirm that the SOC error is larger, compared to the type 1. In the first SOC detection method of calculating an SOC (SOCv) using an OCV as a reference, relationships between the OCV and the SOC are determined based on a material configuration of a battery cell and are important to secure the accuracy of detecting the SOC.

As described above, in the first SOC detection method, the SOC error (ΔSOC) is large depending on the relationships between the OCV and the SOC. On the other hand, in the second SOC detection method of detecting an SOC by the current integration, it is possible to avoid the occurrence of the SOC error, depending on how calculation is performed.

Equation (3) represents an equation for calculating an SOC when the second SOC detection method is used as the SOC detection method. In Equation (3), SOCi indicates an SOC calculated by the second SOC detection method, SOCvinit indicates an SOCv based on an OCV obtained from Equation (2) of the first SOC detection method. When the SOCvinit can be detected, this value is set to a fixed value after that. The SOC changes in real time as the storage battery 32 is charged or discharged. The change in the SOC is represented by the integration of the current value. In Equation (3), Qmax indicates a full charge capacity of the power storage device 16 (Figure 3).
[Equation 3]

$$SOCi = SOCvinit + 100 \times \int Idt \,/Qmax \qquad \cdots\cdots (3)$$

In the calculation of an SOC (SOCi) by the second SOC detection method shown in Equation (3), when the condition that the voltage is flat can be avoided by adjusting the SOC of the storage battery 32 only at the time of the detection of the SOCvinit, it is possible to avoid the occurrence of the SOC error that occurs in the type 2 illustrated in Figure 6(B). The second SOC detection method, however, has a problem that an error in the measured current is integrated due to the integration of the current value and an error (SOC error) in the detected SOC increases over time. Therefore, when the current value is integrated with respect to time over a predetermined period, it is necessary to take measures to reset the SOC error using any method.

An SOC error obtained by the first SOC detection method (SOC detection method using the voltage reference) and an SOC error obtained by the second SOC detection method (SOC detection method by the current integration) have the foregoing features. To improve the SOC error, it is necessary to avoid the condition that the SOC error occurs when the SOC is detected using the first SOC detection method and the second SOC detection method.

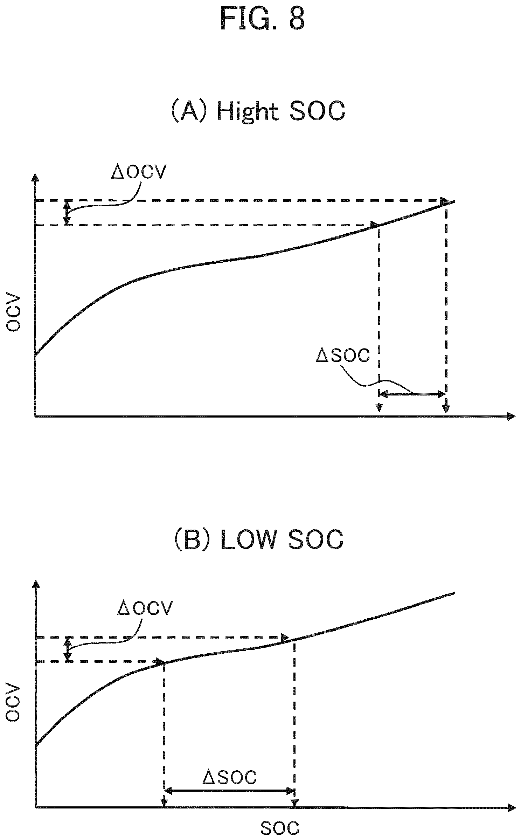

In the first SOC detection method, when a battery cell having a characteristic of the type 2 illustrated in Figure 2 is used, there is a possibility that the accuracy of detecting the SOC may decrease. However, as illustrated in Figures 8(A) and 8(B), the accuracy of detecting the SOC of the battery cell of the type 2 largely varies depending on whether the SOC is high (Figure 8(A)) or low (Figure 8(B)). In addition, the accuracy of the total voltage detected by the voltage detecting device 34 (Figure 3), the accuracy of a current value detected by the current detecting device 31 (Figure 3), and the like are high in a predetermined temperature condition. As the temperature deviates from the predetermined condition, the accuracy of measuring the voltage and the current may decrease. Specifically, since the accuracy of detecting the SOC largely changes due to these various causes, it is desirable that a means for detecting a current SOC error in real time be provided in consideration of the foregoing situations in order to accurately avoid the SOC error.

Under the foregoing circumstances, the error detector 41 (Figure 4) of the state detector 35 (Figure 3) according to the present embodiment has a function of detecting an SOC error in real time. In fact, to calculate the SOCs using the first SOC detection method, the error detector 41 first uses measured values, characteristic information of the battery cells, and the like to calculate the OCVs using Equation (2) and calculates OCV errors ($\Delta$OCVs) included in the calculated OCVs according to the following Equation (4).
[Equation 4]

$$\Delta OCV = \sqrt{\{\Delta V^2 + (I \times \Delta R)^2 + (\Delta I \times R)^2 + \Delta Vp^2\}} \qquad \cdots\cdots (4)$$

In Equation (4), $\Delta$V is an error in a measured voltage, $\Delta$I is an error in a measured current, $\Delta$R is an error in acquired internal resistance, and $\Delta$Vp is an error in a measured polarization voltage. Representative values that do not change in any condition may be set as the measurement errors, such as $\Delta$V and $\Delta$I. In the present embodiment, attention is paid to the fact that the voltage detecting device 34 and the current detecting devices 31 are affected by peripheral temperatures of the voltage detecting device 34 and the current detecting devices 31, and the present embodiment assumes that information formed in a map format and indicating relationships between the peripheral temperatures and measurement errors corresponding to measured values is given to the state detector 35 in advance and the state detector 35 stores and holds the information in the storage region 35A (Figure 3). By representing the relationships in the map format, it is possible to calculate the $\Delta$OCVs with higher accuracy.

Next, the error detector 41 uses Equation (5) to calculate an SOC error that has occurred at the time of the acquisition of an SOCv. In Equation (5), an averaging process is performed by giving a positive value and a negative value to errors, but each of the errors may be calculated by giving a positive value and a negative value, and a larger value may be used as each of the errors.
[Equation 5]

$$\Delta SOCv = \{Map(OCV + \Delta OCV) - Map(OCV - \Delta OCV)\}/2 \qquad \cdots\cdots (5)$$

By using the calculation method using the foregoing Equations (4) and (5), an SOCv error ($\Delta$SOCv) can be calculated in real time. Therefore, the error detector 41 can notify the SOC detector 40 (Figure 4) and the SOC controller 42 (Figure 4) of an SOC error illustrated in Figures 8 and corresponding to a change in the SOC of the storage battery 32 and an SOC error that is based on an instantaneous SOC error during charging or discharging.

(1-3) Flow of SOC Detection Process by State Detector

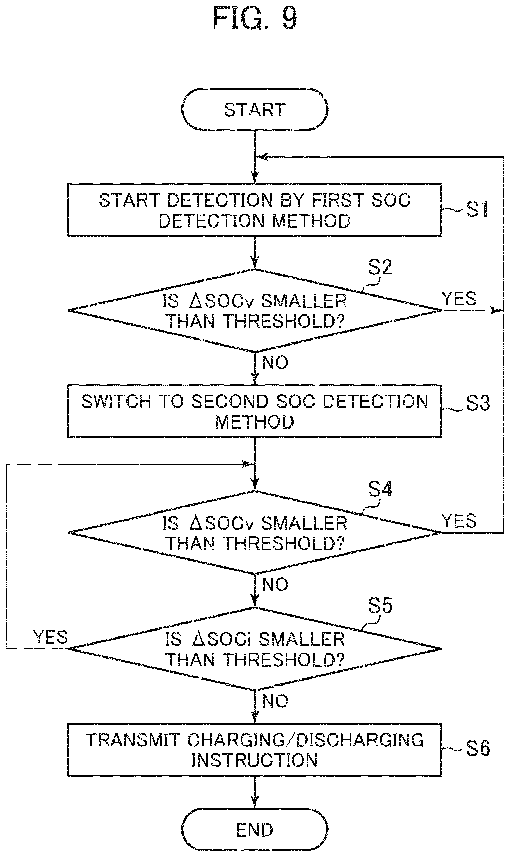

Figure 9 illustrates the flow of a process (hereinafter referred to as SOC detection process) of detecting the SOC of the power storage device 16 by the state detector 35.

In the state detector 35, the SOC detector periodically starts to detect the SOC (SOCv) using the first SOC detection method (S1). In this case, the error detector 41 calculates an error (hereinafter referred to as SOCv error and represented by $\Delta SOCv$ in some cases) in the SOCv in real time and notifies the calculated SOCv error to the SOC detector 40. As described using Figure 8(A), when the SOC is high, the calculated SOCv error is small. As described using Figure (8B), when the SOC is low, the calculated SOCv error is large.

The SOC detector 40 monitors the SOCv notified by the error detector 41 (S2). When the SOCv error exceeds a threshold (hereinafter referred to as SOCv error threshold) set for the SOCv error in advance (NO in S2), the SOC detector 40 switches the SOC detection method to the second SOC detection method (SOC detection method by the current integration) (S3). By executing this, a situation in which the first SOC detection method is disadvantageous can be detected in real time and the SOC detection method can be switched to the method that can avoid the situation. The SOCv error threshold is set at a boundary between an SOCv error range in which a characteristic of the OCV with respect to a change in the SOC is flat and an SOCv error range in which a characteristic of the OCV with respect to a change in the SOC is not flat in the relationships between the OCV of the storage battery 32 and the SOC of the storage battery 32.

When the error detector 41 detects that the SOC detection method by the SOC detector 40 has been switched to the second SOC detection method, the error detector 41 uses the following Equation to calculate an error (hereinafter referred to as SOCi error and represented by $\Delta SOCi$ in some cases) that has occurred in the SOC (SOCi) and the error detector 41 monitors the calculated SOCi error (refer to S5).

[Equation 6]

$$\Delta SOCi = \Delta SOCvinit + 100 \times \int \Delta I dt / Qmax \qquad \cdots\cdots (6)$$

In Equation (6), $\Delta SOCvinit$ is an SOC error with respect to an OCV reference before the switching of the SOC detection method to the second SOC detection method, and $\Delta I$ is an error in a current measured by the current detecting device 31 (Figure 3). In addition, Qmax is a full charge capacity of the power storage device 16 (Figure 3). An error may occur in this parameter due to an effect of degradation or the like, but is omitted to simplify the explanation.

When the SOCv error ($\Delta SOCv$) is large and the SOC detection method is switched to the second SOC detection method, the SOCv error is $\Delta SOCvinit$ and a predicted SOC error in the SOCi after the switching is large. Therefore, to suppress the SOC error as much as possible, it is preferable that the SOC detection method be switched to the second SOC detection method under the condition that the SOCv error decreases, such as the condition that a charging/discharging current is small.

On the other hand, as described above using Equation (3), to calculate the SOCi error ($\Delta SOCi$) using Equation (6), an error in a current measured by the current detecting device 31 is integrated due to the integration of the current value I, and the SOCi error increases over time. Therefore, the error detector 41 calculates the SOCv error while monitoring the SOCi error and monitors the calculated SOCv error (refer to S4).

When the SOCv error is smaller than the foregoing SOCv error threshold (YES in S4) after the switching of the SOC detection method by the SOC detector 40 to the second SOC detection method in step S3, the error detector 41 instructs the SOC detector 40 to restore the SOC detection method to the first SOC detection method (S1). By executing this, the SOC detection method by the SOC detector 40 is switched to the first SOC detection method and the increase in the SOCi error is stopped.

On the other hand, when the SOCv error is not smaller than the SOCv error threshold (NO in S4) after the switching of the SOC detection method by the SOC detector 40 to the second SOC detection method in step S3, and the SOCi error is smaller than a threshold (hereinafter referred to as SOCi error threshold) set for the SOCi error (YES in S5), the second SOC detection method is continuously used as the SOC detection method by the SOC detector 40.

When the SOCv error is not smaller than the SOCv error threshold, for example, when the SOCv error is continuously in a range in which the voltage is flat and a large SOC error occurs, like the case where the SOC is low as illustrated in Figure 8(B), the SOCi error continuously increases and eventually reaches the SOCi error threshold. When the error detector 41 detects that the SOCi error has reached the SOCi threshold (NO in S5), the error detector 41 notifies the result (including the value of the SOC detected at this time) to the SOC controller 42 (Figure 4).

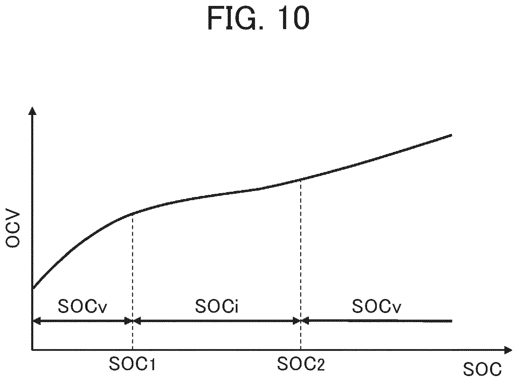

Based on the received result, the SOC controller 42 transmits, to the higher-level controller 37 (controller 19 illustrated in Figure 2) illustrated in Figure 3, a charge/discharge instruction to charge or discharge the SOC of the storage battery 32 (Figure 3) so that the SOC reaches a region in which the SOCv error included in the SOCv satisfies a predetermined value (S6). For example, as illustrated in Figure 10, the "region in which the SOCv error satisfies the predetermined value" is an SOC region that is indicated by "SOCv" in the figure and is not included in an SOC region (indicated by "SOCi" in the figure) and in which a characteristic of the OCV with respect to a change in the SOC is flat. In other words, the "region in which the SOCv error satisfies the predetermined value" is a region in which the voltage largely changes as the SOC changes.

When a method of charging or discharging the storage battery 32 to the region in which the SOCv error satisfies the predetermined value can be used in accordance with the charge/discharge instruction transmitted by the SOC controller 42 to the higher-level controller 37 (controller 19 illustrated in Figure 2) illustrated in Figure 3 immediately after the SOCi error reaches the SOCi error threshold due to an increase in the SOCi error, the SOC of the storage battery 32 quickly changes and reaches a region in which the SOCv error decreases, and the SOC detection method is switched from the second SOC detection method to the first SOC detection method to prevent a further increase in the SOC error.

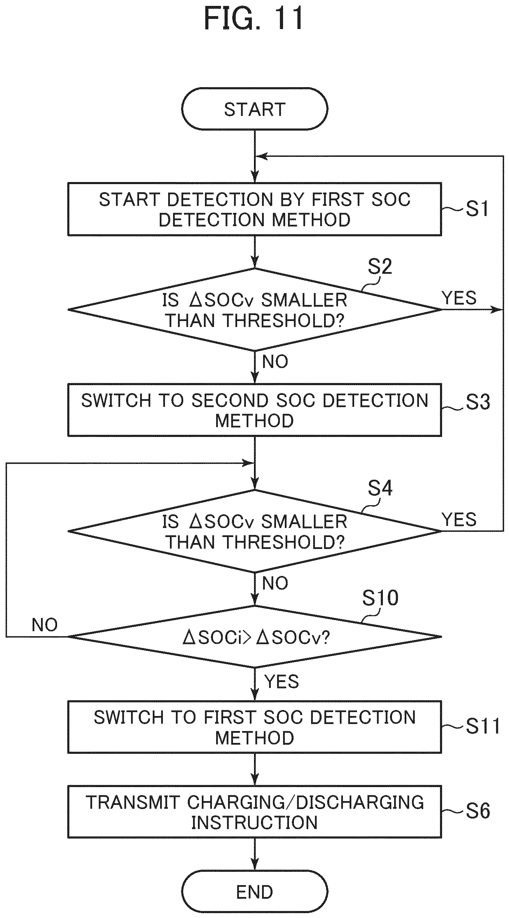

In Figure 9, as described above, when the SOCv error is continuously large and the SOCi error is also large (NO in S5) after the switching of the SOC detection method to the second SOC detection method (S3), the charge/discharge instruction is transmitted to the higher-level controller 37 (controller 19 illustrated in Figure 2) illustrated in Figure 3 (S6), but the state detector 35 (Figure 3) may execute the SOC detection in accordance with a procedure illustrated in Figure 11 in which processes corresponding to the processes illustrated in FIG. 9 are indicated by the same reference signs as those of the processes illustrated in Figure 9.

Specifically, after the SOC detection method by the SOC detector 40 (Figure 4) is switched to the second SOC detection method (S3), the error detector 41 (Figure 4) sequentially determines whether the SOCv error is smaller than the SOCv error threshold and whether the SOCi error is larger than the SOCv error (S4 and S10). When the SOCv error is continuously larger than the SOCv error threshold and the SOCi error obtained by the second SOC detection method currently used is larger than the SOCv error (YES in S10), the error detector 41 gives, to the SOC detector 40, an instruction to restore the SOC detection method to the first SOC detection method in which the SOC error is small (S11). After that, the SOC controller 42 transmits a charge/discharge instruction to the higher-level controller 37 (controller 19 illustrated in Figure 2) (S6). By executing this, the first SOC detection method in which the error is relatively small can be used as the SOC detection method used by the SOC detector 40 until the completion of a process of charging or discharging the storage battery 32 so that the SOC of the storage battery 32 reaches to the region in which the SOCv error decreases after the reception of the charge/discharge instruction.

In addition, the details of the processes may not be switched based on the SOC error. The occurrence of the SOC error may be predicted from the value of the SOC based on a result of confirming relationships between the SOC and the SOC error in advance, and the details of the processes may be switched.

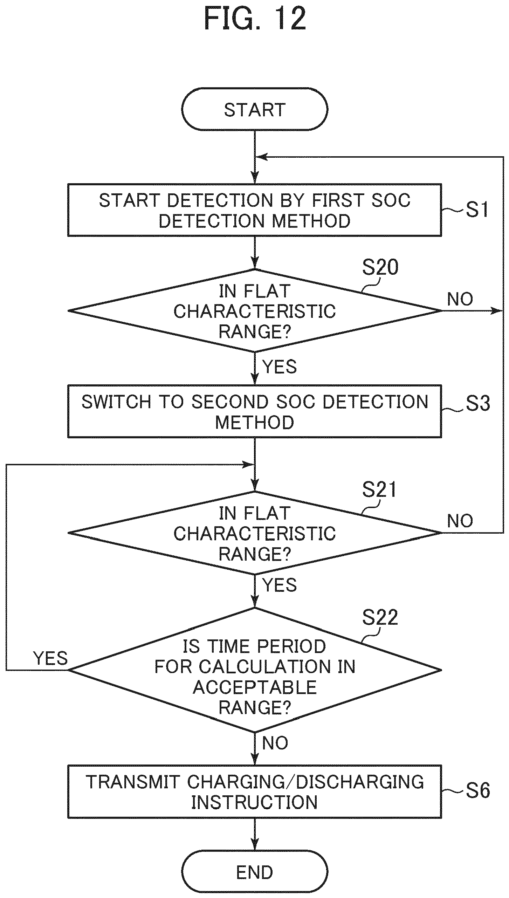

Specifically, as illustrated in Figure 12 in which processes corresponding to the processes illustrated in Figure 9 are indicated by the same reference signs as those of the processes illustrated in FIG. 9, when the error detector 41 recognizes, based on the result of detecting the SOC in step S1, that the SOC detection is executed in a flat characteristic range of the battery voltage (YES in S20), the error detector 41 switches the SOC detection method by the SOC detector 40 to the second SOC detection method (S3). Then, the error detector 41 checks whether the SOC detection is continuously executed in the flat characteristic range of the battery voltage (S21). When the SOC detection is continuously executed and a time period for the calculation of the SOCi set after preliminary calculation of the error exceeds an acceptable time period from the execution of the calculation (NO in S22), the SOC controller 42 transmits a charge/discharge instruction to the higher-level controller 37 (controller 19 illustrated in Figure 2) (S6). Therefore, arithmetic processing for predicting the SOC error is not required and the SOC detection can be executed with a small processing amount. Even when any of Figures 9, 11, and 12 is used, the SOC error obtained based on the characteristic of the battery voltage is reduced.

(1-4) Efficient Method of Charging or Discharging Storage Batteries in Hybrid Vehicle

In the hybrid railway vehicle 10 illustrated in Figure 2, to change the SOCs to the region in which the SOCv satisfies the predetermined value after the charging of the storage batteries 32 (Figure 3), the generator 12 (Figure 2) can be used as a charging unit. Specifically, during the traveling or stop of the hybrid railway vehicle 10, the generator 12 is operated to change the SOCs of the storage batteries 32 to the region in which the SOCv satisfies the predetermined value. In addition, to discharge the storage batteries 32 and change the SOCs to the region in which the SOCv satisfies the predetermined value, the induction motor 15 or the SIV 18 is used to consume electric energy stored in the storage batteries 32.

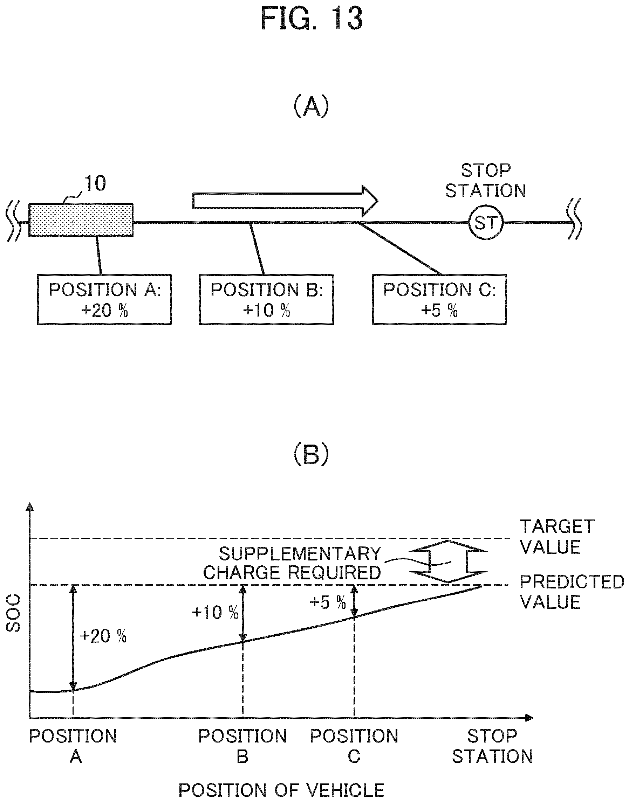

A method of efficiently controlling the charging or discharging of each of the storage batteries 32 using traveling position information of the hybrid railway vehicle 10 is described with reference to Figures 13. Figure 13(A) illustrates predicted information (hereinafter referred to as SOC change prediction information) of a change in the SOC in a region from the position of the vehicle to a stop station ST. Figure 13(B) illustrates an example of the change in the SOC in the region to the stop station ST.

Until the hybrid railway vehicle 10 arrives at the stop station ST, the SOC of the storage battery 32 increases due to regenerative braking. Then, the vehicle stops. When the SOC can increase to an SOC region in which the SOCv error is smaller than the SOCv error threshold due to charging caused by the regenerative braking, it is not necessary to charge the storage battery 32 using the foregoing generator 12 (Figure 2). To determine whether the charging using the generator 12 is required, the SOC change prediction information of the change in the SOC in a region from each of positions of the vehicle that are indicated by "position A" to "position C" illustrated in Figure 13(A) to the stop station ST is used.

Specifically, when the error detector 41 (Figure 4) detects that the SOCi error is equal to or larger than the SOCi error threshold at the position A illustrated in Figure 13(A), the error detector 41 notifies the result of the detection to the SOC controller 42 (Figure 4). In addition, based on the notification, the SOC controller 42 transmits, to the higher-level controller 37 (controller 19 illustrated in Figure 2), a charge/discharge instruction to charge or discharge the storage battery 32 to a target SOC value (hereinafter referred to as target SOC value) set in the SOC region in which the SOCv error included in the SOCv is smaller than the SOCv error threshold.

When the SOC change prediction information illustrated in Figure 13(A) is used, it is possible to recognize that the amount of a change in the SOC for a time period from the time when the railway vehicle 10 is at the position A to the time when the railway vehicle 10 arrives at the next stop station ST is +20%. When the current SOC is 40%, the SOC when the railway vehicle 10 arrives at the next stop station can be predicted to be 60%. When the target SOC value is 70%, the SOC is insufficient by 10% and charging for 10% is required.

When the determination of whether charging is required when the vehicle is at the position A is made, a necessary amount of power for the charging is determined, and the charging is completed before the arrival at the stop station ST, it is not necessary to execute the charging after the arrival at the stop station ST, and an effect of preventing noise in the stop station ST can be obtained. Similarly, when the SOCi error is detected to be equal to or larger than the SOCi error threshold at the position B, a predicted SOC value of +10% at the stop station ST is obtained. When the SOCi error is detected to be equal to or larger than the SOCi error threshold at the position C, a predicted SOC value of +5% at the stop station ST is obtained. By executing the charging during the traveling for the difference from the target SOC value, it is possible to prevent the occurrence of noise in the stop station ST.

The foregoing case is an example in which the SOC increases until the vehicle arrives at the stop station ST. Under the condition that a discharge amount of the storage battery 32 is large, such as the condition that many upward slopes exist, power consumed by electrical equipment is large, or a time period for traveling using power discharged from the storage battery 32 as control of the vehicle is long, the SOC may decrease at the stop station ST, contrary to the foregoing case. In this case, a predicted SOC value is calculated from the current SOC and the amount of the decrease in the SOC. When the target SOC value is in a low SOC range, electrical energy accumulated in the storage battery 32 is consumed using the induction motor 15 (Figure 2) or the SIV 18 (Figure 2) during the traveling. Therefore, when the vehicle arrives at the stop station ST, the value of the SOC reaches the target SOC value and it is possible to prevent a further increase in the SOC error.

A plurality of target SOC values can be set in advance as described above. In this case, after a predicted SOC value at the stop station ST is obtained based on the SOC change prediction information of a change in the SOC in a region from the vehicle's position illustrated in Figure 13(A) to the stop station ST, the closest target SOC value among the target SOC values is selected and the charging or the discharging is executed.

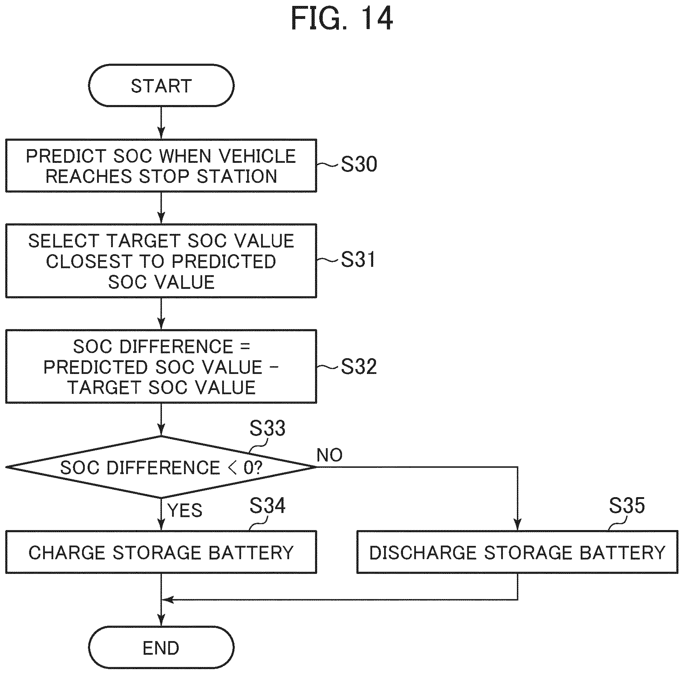

Figure 14 illustrates the flow of a series of processes (hereinafter referred to as charging/discharging control process) to be executed by the higher-level controller 37 (controller 19 illustrated in Figure 2) that is illustrated in Figure 3 and has received the charge/discharge instruction from the state detector 35 (Figure 3) in the case where the plurality of target SOC values are set.

Upon receiving the charge/discharge instruction, the higher-level controller 37 starts the charging/discharging control process and predicts the SOC at the time of the arrival of the hybrid railway vehicle 10 at the next stop station ST (S30). The predicted SOC is hereinafter referred to as predicted SOC value. The higher-level controller 37 calculates the predicted SOC value based on the SOC change prediction information, predicted from the current SOC and the position of the hybrid railway vehicle 10, of a change in the SOC in a region to the next stop station ST.

When the plurality of target SOC values exist, the higher-level controller 37 selects, as a final target SOC value, the closest target SOC value to the predicted SOC value (S31) and calculates the difference (hereinafter referred to as SOC difference) between the predicted SOC value and the target SOC value selected in step S31 (S32). After that, the higher-level controller 37 determines whether the value of the SOC difference calculated in step S32 is negative (S33).

Obtaining a positive result of the determination of step S33 indicates that the SOC that is predicted to reach at the time of the stop of the vehicle is not sufficiently high. In this case, the higher-level controller 37 transmits, to the load controller 38 (Figure 3), a control instruction to perform, during the traveling of the hybrid railway vehicle 10, a task (of charging the storage battery 32 to supplement an insufficient SOC) of charging the storage battery 32 with the amount of electric power to eliminate the SOC difference (S34). Then, the higher-level controller 37 terminates the charging/discharging control process.

On the other hand, obtaining a negative result of the determination of step S33 indicates that the predicted SOC value is excessively higher than the target SOC value. In this case, the higher-level controller 37 transmits, to the load controller 38 (Figure 3), a control instruction to perform, during the traveling of the hybrid railway vehicle 10, a task (of discharging the storage battery 32 to reduce the SOC) of discharging the storage battery 32 with the amount of electric power to eliminate the SOC difference (S35). Then, the higher-level controller 37 terminates the charging/discharging control process.

Due to the charging/discharging control process, the charging or discharging of the storage battery 32 that is executed to reduce the SOC error can be completed before the stop of the hybrid railway vehicle 10.

(1-5) Effects of Embodiment

As described above, in the present embodiment, the SOC error (SOCv error) when the first SOC detection method of detecting the SOC using the voltage reference, and the SOC error (SOCi error) when the second SOC detection method of detecting the SOC by the current integration, are calculated, and the SOC detection method by the SOC detector 40 is switched between the first SOC detection method and the second SOC detection method based on the calculated SOC errors (SOCv error and SOCi error).

In this case, in the present embodiment, since the SOC errors that occur depending on the characteristic information of the battery cells, an error characteristic of the sensor used, a peripheral environment, and the like can be recognized in real time, it is possible to easily suppress the SOC errors and reliably reduce the SOC errors. As a result, it is possible to reliably avoid a reduction in the accuracy of detecting the SOC and control the charging and discharging of the secondary battery with high reliability.

(2) Second Embodiment

The first embodiment describes the case where the SOC detector 40 (Figure 4) of the state detector 35 (Figure 3) detects each of the SOCs while switching between the first SOC detection method and the second SOC detection method. On the other hand, a present embodiment describes the case where a third SOC detection method in which the two SOCs that are the SOCv and the SOCi are combined using a weight coefficient is used as an SOC detection method executed by the SOC detector 40.

The SOCv can be calculated using the foregoing Equation (2) and the relationships between the OCV and the SOC. The relationships are described above with reference to Figure 6. When the two SOCs that are the SOCv and the SOCi are combined, the SOC detector 40 additionally calculates the following Equations (7) and (8).

[Equation 7]

$$SOCi = SOCc\_Z + 100 \times \int Idt / Qmax \qquad \cdots\cdots (7)$$

[Equation 8]

$$SOCc = W \times SOCv + (1 - W) \times SOCi \qquad \cdots\cdots (8)$$

In Equations (7) and (8), SOCc indicates an SOC result obtained by using the weight coefficient to combine the two SOCs that are the SOCv and the SOCi, SOCc_Z indicates a result of combining the SOCs a certain time ago, and W indicates the coefficient (weight coefficient) to be used to weight both SOC values. A value optimized by calculating the SOC errors that may occur in the SOCs in advance and minimizing the SOC errors is used as the weight coefficient W and stored in the storage region 35A (Figure 3) of the state detector 35 in advance.

The weight coefficient W can be determined by calculating the errors that may occur in the SOCs in real time. In addition, the weight coefficient W may be determined based on one or more of information items, such as the temperature of the power storage device 16, the SOC of the power storage device 16, characteristic information, such as the internal resistance, a usage state of the power storage device 16 that is represented by values of input and output currents, and abnormal states of the sensor and the like. In addition, the weight coefficient W may be determined by selecting two or more information items that are the temperature of the power storage device 16, the SOC of the power storage device 16, the characteristic information, such as the internal resistance, and the values of the input and output currents and combining the two or more information items. Another SOC (SOCc) that is more accurate than the SOCv can be calculated by combining the SOCv and SOCi.

In the first embodiment, the SOC detection method to be used by the SOC detector 40 of the state detector 35 is switched between the first SOC detection method and the second SOC detection method. In the present embodiment, however, the SOC detection method is switched between the second SOC detection method and the third SOC detection method. Specifically, an error

(hereinafter referred to as SOCc error and represented by $\Delta$SOCc when necessary) in the SOCc is calculated according to the following Equations (9) and (10). When the calculated SOCc error exceeds a threshold, the SOC detector 40 of the state detector 35 switches the SOC detection method from the third SOC detection method to the second SOC detection method. As a specific process of switching the SOC detection method, a process of using the second SOC detection method as a result when the weight coefficient W of Equation (8) is forcibly changed from the current value to zero can be used.

[Equation 9]

$$\Delta SOCi = \Delta Ioffset + \Delta SOCc\_Z \qquad \cdots\cdots (9)$$

[Equation 10]

$$\Delta SOCc = \sqrt{[(W \times \Delta SOCv)^2 + \{(1 - W) \times \Delta SOCi\}^2]} \qquad \cdots\cdots (10)$$

In Equation (9), $\Delta$Ioffset indicates an error accumulated in integration calculation, and $\Delta$SOCc_Z indicates an SOC error a certain time ago. A result of calculating the SOCc error is treated as $\Delta$SOCc_Z of Equation (9) in a next calculation step.

According to the foregoing present embodiment, the same effects as those described in the first embodiment can be obtained, and it is possible to obtain an effect in which the SOC (SOCc) that is more accurate than the SOCv can be calculated.

(3) Other Embodiment

Although the first embodiment describes the case where the SOC change prediction information described above with reference to Figure 13 is stored as the fixed value, the invention is not limited to this. After actual values of changes in the SOC are acquired in a daily operation, the higher-level controller 37 may update the SOC change prediction information based on the actual values. By executing this, the highly accurate SOC change prediction information can be built. In this case, after the plurality of actual values are averaged or the like to reduce a variation in the actual values, new SOC change prediction information is written over the old SOC change prediction information.

Although the first embodiment describes the case where the SOC change prediction information is stored as the value, the invention is not limited to this. Speed information during the traveling of the vehicle may be detected, and kinetic energy may be calculated from a result of detecting the speed information and information of the mass of the vehicle. The amount of electric power that can be recovered from the kinetic energy by regenerative braking may be calculated. The amount of a change in the SOC of the storage battery 32 when the calculated amount of electric power is recovered may be calculated, and a result of predicting the SOC at the next stop station ST may be calculated based on the calculated amount of the change in the SOC and the SOC of the storage battery 32 when an operation of stopping the hybrid railway vehicle 10 is started. In this case, since a predicted value of the change in the SOC when the regenerative braking is started by the regenerative braking before the arrival at the stop station can be calculated, a task of charging the storage battery 32 at the stop station can be avoided by charging the power storage device 16 by the regenerative braking and the other method and adjusting the SOC to a desired value.

The second embodiment describes the method of calculating the SOCc error ($\Delta$SOCc) in real time. When the SOCc error is calculated in advance, relationships between the SOCc and the SOCc error can be recognized in advance, and the SOCc is a predetermined value, the SOC detection method may be switched from the third SOC detection method to the second SOC detection method. As a specific process of switching the SOC detection method, a process of using the second SOC detection method as a result when the weight coefficient W of Equation (8) is forcibly changed from the current value to zero can be used.

Although the first and second embodiments describe the case where the invention is applied to the hybrid railway vehicle, the invention is not limited to this and is widely applicable to a storage battery system for a hybrid electric car, a storage battery system for an electric car, an industrial storage battery system for a mobile body, and the like.

The invention is not limited to the foregoing embodiments. Other embodiments conceivable within the scope of the technical idea of the invention are included in the range of the invention.

Industrial Applicability

The invention is widely applicable to various systems using storage batteries.

List of Reference Signs

10 ····· Hybrid railway vehicle, 11 ····· Engine, 12 ····· Generator, 13 ····· Converter, 14 ····· Inverter, 15 ····· Induction motor, 16 ····· Power storage device, 18 ····· SIV, 19 ····· Controller, 20A to 20D ····· Current detector, 30 ····· Battery module, 31 ····· Current detecting device, 32 ····· Storage battery, 33 ····· Battery unit, 34 ····· Voltage detecting device, 35 ····· State detector, 36 ····· Thermometer, 37 ····· Higher-level controller, 38 ····· Load controller, 40 ····· SOC detector, 41 ····· Error detector, 42 ····· SOC controller

**Claims**

1. A battery control device that controls charging and discharging of a storage battery, comprising:

   a measurer that measures a predetermined physical amount related to a state of the storage battery; and
   a state detector that detects the state of the storage battery, wherein
   the state detector includes
   a charging rate detector that detects a charging rate of the storage battery based on the physical amount measured by the measurer and characteristic information of the storage battery,
   an error detector that detects an error in the charging rate detected by the charging rate detector,
   a charging rate controller that controls the charging rate of the storage battery, and
   a load controller that charges and discharges the storage battery,
   the error detector detects, in real time, an error in the charging rate, detected by the charging rate detector, of the storage battery based on one or more of information items that are the measurement result of the measurer, the characteristic information of the storage battery, and a calculation error that occurs depending on an environmental condition, or calculates an error based on the charging rate in advance and predicts an error in the charging rate according to the result of the charging rate detector based on a relationship between the charging rate confirmed in advance and the error in the charging rate,
   the charging rate detector can detect the charging rate of the storage battery by different charging rate detection methods and switches a charging rate detection method of detecting the charging rate of the storage battery to another one of the charging rate detection methods based on the error in the charging rate that has been detected or predicted by the error detector so as to improve the error,
   the charging rate controller transmits, to a higher-level control device, a charge/discharge instruction to charge or discharge the storage battery based on the result of the detection or prediction by the error detector, and
   the load controller charges or discharges the storage battery according to a control instruction given by the higher-level controller based on the charge/discharge instruction.

2. The battery control device according to claim 1, wherein
   the charging rate detector can detect the charging rate of the storage battery by two or more of the charging rate detection method of detecting the charging rate using a voltage of the storage battery as a reference, the charging rate detection method of detecting the charging rate by integrating a current input to and output from the storage battery, and the charging rate detection method obtained by combining two or more of the different charging rate detection methods, and
   the charging rate detector switches the charging rate detection method to be used, based on the error in the charging rate that has been detected or predicted by the error detector.

3. The battery control device according to claim 1, wherein
   the charging rate detector switches the charging rate detection method when the error in the charging rate that has been detected by the error detector is equal to or larger than a set threshold, or the charging rate detector switches the charging rate detection method based on whether the error in the charging rate that has been detected by the error detector is in a range in which a voltage characteristic of an open circuit of the storage battery with respect to a change in the charging rate is flat.

4. The battery control device according to claim 3, wherein
   the threshold is set at a boundary between the range in which the voltage characteristic with respect to the change in the charging rate is flat and a range in which the voltage characteristic is not flat in relationships between the voltage of the open circuit of the storage battery and the charging rate.

5. The battery control device according to claim 4, wherein
the charging rate detector switches the charging rate detection method to detect the charging rate by the charging rate detection method of detecting the charging rate by integrating the current input to and output from the storage battery when the charging rate is in the range in which the voltage characteristic with respect to the change in the charging rate is flat and to detect the charging rate by the charging rate detection method of detecting the charging rate using the voltage of the storage battery as the reference or the charging rate detection method obtained by combining the two or more different charging rate detection methods when the charging rate is in the range in which the voltage characteristic is not flat.

6. The battery control device according to claim 1, wherein
when the error in the charging rate that has been detected by the error detector exceeds a set threshold, the charging rate controller transmits, to the higher-level control device, the charge/discharge instruction to adjust the charging rate to a set target value.

7. The battery control device according to claim 6, wherein
the target value is set in a range of the charging rate in which the voltage characteristic with respect to the change in the charging rate is not flat in the relationships between the voltage of the open circuit of the storage battery and the charging rate.

8. The battery control device according to claim 6, wherein
two or more target values are set, and a target value that is among the two or more target values and is the closest to a charging state of the storage battery when the error in the charging rate is equal to or larger than the predetermined value is selected as the final target value.

9. The battery control device according to claim 1, wherein the storage battery is mounted on a railway vehicle, and the load controller charges or discharges the storage battery according to the control instruction given by the higher-level control device so that at least one of a generator of the railway vehicle, an induction motor of the railway vehicle, and an SIV of the railway vehicle is operated.

10. A battery control system that controls charging and discharging of a storage battery, comprising:

   a measurer that measures a predetermined physical amount related to a state of the storage battery;
   a state detector that detects the state of the storage battery; and
   a higher-level control device that controls the charging and discharging of the storage battery based on the result of the detection by the state detector, wherein
   the state detector includes
   a charging rate detector that detects a charging rate of the storage battery based on the physical amount measured by the measurer and characteristic information of the storage battery,
   an error detector that detects or predicts an error in the charging rate detected by the charging rate detector,
   a charging rate controller that controls the charging rate of the storage battery, and
   a load controller that charges and discharges the storage battery,
   the error detector detects, in real time, an error in the charging rate, detected by the charging rate detector, of the storage battery based on one or more of information items that are the result of the measurement by the measurer, the characteristic information of the storage battery, and a calculation error that occurs depending on an environmental condition, or calculates an error based on the charging rate in advance and predicts an error in the charging rate according to the result of the charging rate detector based on relationships between the charging rate confirmed in advance and the error in the charging rate,
   the charging rate detector can detect the charging rate of the storage battery by different charging rate detection methods and switches a charging rate detection method of detecting the charging rate of the storage battery to another one of the charging rate detection methods based on the error in the charging rate that has been detected or predicted by the error detector so as to improve the error,
   the charging rate controller transmits, to the higher-level control device, a charge/discharge instruction to charge or discharge the storage battery based on the result of the detection or prediction by the error detector,
   the load controller charges or discharges the storage battery according to a control instruction given by the higher-level control device based on the charge/discharge instruction,

the storage battery is mounted on a railway vehicle,
the higher-level control device acquires a result of predicting the charging rate when the railway vehicle arrives at a next stop station, and
the higher-level control device transmits, to the load controller, the control instruction to charge or discharge the storage battery with the amount of electric power to eliminate a difference between the acquired result of predicting the charging rate and the target value.

11. The battery control system according to claim 10, wherein
a charging rate change amount that is the amount of a change in the charging rate in a region from the position of the railway vehicle to the next stop station at which the railway vehicle arrives is given to the higher-level control device, and
the higher-level control device calculates a result of predicting the charging rate at the next stop station, based on the charging rate change amount predicted from the position of the railway vehicle and the current charging rate of the storage battery when the result of detecting the error in the charging rate is equal to or larger than a predetermined value.

12. The battery control system according to claim 11, wherein
the higher-level control device updates, based on an actual value of the charging rate change amount, the amount of a change in the charging rate in the region from the position of the railway vehicle to the stop station at which the railway vehicle arrives.

13. The battery control system according to claim 10, wherein
the higher-level control device acquires the speed of the railway vehicle, calculates kinetic energy based on the acquired speed and the mass of the railway vehicle, calculates the amount of a change in the charging rate when the calculated kinetic energy is recovered as electric energy, and acquires a result of predicting the charging rate at the next stop station based on the calculated amount of the change in the charging rate and the charging rate of the storage battery when an operation of stopping the railway vehicle is started.

14. A battery control method to be executed by a battery control device that controls charging and discharging of a storage battery, wherein
the battery control device includes
a measurer that measures a predetermined amount related to a state of the storage battery, and
a state detector that detects the state of the storage battery,
the state detector includes
a charging rate detector that can detect the charging rate of the storage battery by different charging rate detection methods and detects the charging rate of the storage battery based on the physical amount measured by the measurer and characteristic information of the storage battery,
an error detector that detects an error in the charging rate detected by the charging rate detector,
a charging rate controller that controls the charging rate of the storage battery, and
a load controller that charges and discharges the storage battery, and
the battery control method comprises:

a first step of causing the error detector to detect, in real time, an error in the charging rate, detected by the charging rate detector, of the storage battery based on one or more of information items that are the result of the measurement by the measurer, the characteristic information of the storage battery, and a calculation error that occurs depending on an environmental condition, or calculates an error based on the charging rate in advance and predicts an error in the charging rate according to the result of the charging rate detector based on relationships between the charging rate confirmed in advance and the error in the charging rate;
a second step of causing the charging rate detector to switch a charging rate detection method of detecting the charging rate of the storage battery to another one of the charging rate detection methods based on the error in the charging rate that has been detected or predicted by the error detector so as to improve the error;
a third step of causing the charging rate controller to transmit, to a higher-level control device, a charge/discharge instruction to charge or discharge the storage battery based on the result of the detection or prediction by the error detector; and
a fourth step of causing the load controller to charge or discharge the storage battery according to a control instruction given by the higher-level control device based on the charge/discharge instruction.

# FIG. 1

# FIG. 2

EP 3 806 227 A1

# FIG. 3

# FIG. 4

35

VOLTAGE ———→

CURRENT ———→

TEMPERATURE ———→

40 ———→ SOC

41 ———→ 42 ———→ CHARGING/ DISCHARGING INSTRUCTION

# FIG. 5

CCV

OCV      IR      Vp

52

51

50        53

# FIG. 6

## (A) TYPE 1

## (B) TYPE 2

# FIG. 7

## (A) TYPE 1

## (B) TYPE 2

# FIG. 8

## (A) Hight SOC

## (B) LOW SOC

# FIG. 9

```
                    START

        START DETECTION BY FIRST SOC        S1
            DETECTION METHOD

                                                         S2
        IS ΔSOCv SMALLER                       YES
        THAN THRESHOLD?
                        NO

        SWITCH TO SECOND SOC DETECTION        S3
                METHOD

                                                         S4
        IS ΔSOCv SMALLER                       YES
        THAN THRESHOLD?
                        NO
                                                         S5
   YES  IS ΔSOCi SMALLER
        THAN THRESHOLD?
                        NO

        TRANSMIT CHARGING/DISCHARGING         S6
                INSTRUCTION

                     END
```

# FIG. 10

# FIG. 11

```
                    ┌─────────┐
                    │  START  │
                    └────┬────┘
                         │ ◄──────────────────────┐
                         ▼                         │
         ┌──────────────────────────────┐         │
         │   START DETECTION BY FIRST SOC│ ~S1     │
         │      DETECTION METHOD         │         │
         └──────────────┬───────────────┘         │
                        ▼                          │
                      S2                           │
              ╱───────────────╲          YES       │
             ╱  IS ΔSOCv SMALLER ╲──────────────────┤
             ╲  THAN THRESHOLD? ╱                   │
              ╲───────┬───────╱                     │
                      │ NO                          │
                      ▼                             │
         ┌──────────────────────────────┐          │
         │  SWITCH TO SECOND SOC DETECTION│ ~S3     │
         │           METHOD              │          │
         └──────────────┬───────────────┘          │
              ┌─────────▼                           │
              │         ▼                           │
              │       S4                            │
              │ ╱───────────────╲        YES        │
              │╱  IS ΔSOCv SMALLER ╲─────────────────┘
              │╲  THAN THRESHOLD? ╱
              │ ╲───────┬───────╱
              │         │ NO
              │         ▼        S10
        NO    │ ╱───────────────╲
     ─────────┤ ╲  ΔSOCi> ΔSOCv? ╱
              │  ╲───────┬───────╱
                         │ YES
                         ▼
         ┌──────────────────────────────┐
         │   SWITCH TO FIRST SOC DETECTION│ ~S11
         │           METHOD              │
         └──────────────┬───────────────┘
                        ▼
         ┌──────────────────────────────┐
         │ TRANSMIT CHARGING/DISCHARGING │ ~S6
         │         INSTRUCTION           │
         └──────────────┬───────────────┘
                        ▼
                    ┌─────────┐
                    │   END   │
                    └─────────┘
```

# FIG. 12

```
                          ┌──────────┐
                          │  START   │
                          └────┬─────┘
                               │                          ◄─────┐
                               ▼                                │
              ┌──────────────────────────────────┐             │
              │  START DETECTION BY FIRST SOC     │─── S1       │
              │       DETECTION METHOD            │             │
              └────────────────┬─────────────────┘             │
                               ▼              S20               │
                         ◄─────────────►                       │
                          IN FLAT                   NO          │
                          CHARACTERISTIC  ──────────────────────►
                          RANGE?                               │
                         ◄─────────────►                       │
                               │ YES                           │
                               ▼                               │
              ┌──────────────────────────────────┐            │
              │  SWITCH TO SECOND SOC DETECTION   │─── S3      │
              │          METHOD                   │            │
              └────────────────┬─────────────────┘            │
                ┌──────────────┘                              │
                │              ▼           S21                │
                │        ◄─────────────►                      │
                │         IN FLAT                  NO         │
                │         CHARACTERISTIC ────────────────────►┘
                │         RANGE?
                │        ◄─────────────►
                │              │ YES
                │              ▼                S22
                │        ◄───────────────►
         YES    │         IS TIME PERIOD
        ┌───────┤         FOR CALCULATION IN
        │       │         ACCEPTABLE
        │       │         RANGE?
        │       │        ◄───────────────►
        │       │              │ NO
        │       │              ▼
        │       │  ┌──────────────────────────────────┐
        │       │  │ TRANSMIT CHARGING/DISCHARGING     │─── S6
        │       │  │         INSTRUCTION               │
        │       │  └────────────────┬─────────────────┘
        │       │                   ▼
        └───────┘              ┌──────────┐
                               │   END    │
                               └──────────┘
```

# FIG. 13

## (A)

## (B)

# FIG. 14

START

PREDICT SOC WHEN VEHICLE REACHES STOP STATION — S30

SELECT TARGET SOC VALUE CLOSEST TO PREDICTED SOC VALUE — S31

SOC DIFFERENCE = PREDICTED SOC VALUE – TARGET SOC VALUE — S32

S33

SOC DIFFERENCE $<$ 0?

NO

YES — S34

CHARGE STORAGE BATTERY

S35

DISCHARGE STORAGE BATTERY

END

## INTERNATIONAL SEARCH REPORT

International application No.

PCT/JP2019/009831

### A. CLASSIFICATION OF SUBJECT MATTER
Int. Cl. H01M10/48(2006.01)i, B60L3/00(2019.01)i, B60L50/15(2019.01)i,
B60L50/40(2019.01)i, B60L50/50(2019.01)i, B60L53/00(2019.01)i, B60L55/00(2019.01)i,
B60L58/00(2019.01)i, G01R31/36(2019.01)i, H01M10/44(2006.01)i, H02J7/00(2006.01)i

According to International Patent Classification (IPC) or to both national classification and IPC

### B. FIELDS SEARCHED

Minimum documentation searched (classification system followed by classification symbols)
Int. Cl. H01M10/48, B60L3/00, B60L50/15, B60L50/40, B60L50/50, B60L53/00,
B60L55/00, B60L58/00, G01R31/36, H01M10/44, H02J7/00

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-215151 A (TOYOTA MOTOR CORP.) 27 October 2011, fig. 1-12, paragraphs [0003], [0013], | 1, 2, 9, 10, 14 |
| Y | [0050], [0056], [0067], [0082], [0097], [0100] & | 3-8 |
| A | JP 2007-178215 A & US 2009/0001992 A1, paragraphs [0003], [0012], [0061], [0068], [0079], [0091], [0106] & US 2011/0257914 A1 & WO 2007/074614 A1 & EP 1972955 A1 & EP 2985618 A1 & CN 101346636 A & KR 10-2008-0088617 A & CN 103163474 A | 11-13 |
| Y | WO 2017/221899 A1 (KABUSHIKI KAISHA TOYOTA JIDOSHOKKI) 28 December 2017, paragraph [0058] (Family: none) | 3-8 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22.03.2019 | 04.06.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2019/009831 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2010-283922 A (TOYOTA MOTOR CORP.) 16 December 2010, fig. 27, paragraphs [0065], [0145] & US 2012/0065824 A1, fig. 27, paragraphs [0094], [0174] & WO 2010/140044 A1 & CA 2757943 A1 & CN 102803977 A | 3-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006105821 A